# EUROPEAN PATENT APPLICATION

(11) **EP 3 886 300 A1**
(43) Date of publication of application: **29.09.2021**
(21) Application number: 21153507.5
(22) Date of filing: 26.01.2021
(51) Int. Cl.: H02K 15/02, H02K 15/12, H02K 1/06, H01F 3/02, H01F 27/26

(54) **PLATE STACKED BODY, STACKED IRON CORE, AND MOTOR**

(30) Priority: 27.03.2020 JP 2020058716
(71) Applicant: Nidec Corporation, Minami-ku Kyoto 601-8205 (JP)
(72) Inventor: Honda, Takeshi, Kyoto 601-8205 (JP)
(74) Representative: Stöckeler, Ferdinand

(57) **Abstract**

A plate stacked body enabling a plurality of plates, stacked in the thickness direction, to be joined together with an adhesive with sufficient joining strength without impairing the function is provided. A stator core (31) is a plate stacked body formed by stacking a plurality of stator core plates (33) in the thickness direction. The stator core (31) includes a plurality of disk-shaped stator core plates (33) that are stacked in the thickness direction and constitute a columnar stacked body having a filled portion (34) extending in the axial direction, and an adhesive portion (35) in a pillar shape that is configured of an adhesive contained in the filled portion (34) and bonds the plurality of stator core plates (33) together in the axial direction. A part of the inner surfaces of the filled portion (34) is configured of a surface (331b) in the thickness direction of a first stator core plate (331) exposed in the filled portion (34). The adhesive portion (35) has an axial adhesive portion (35a) that adheres in the axial direction to the surface (331b) in the thickness direction of the first stator core plate (331) exposed in the filled portion (34).

## Description

### Technical Field

The present invention relates to a plate stacked body, a stacked iron core, and a motor.

### Background Art

A plate stacked body obtained by joining a plurality of plates in the axial direction in a state of being stacked in the thickness direction is known. As such a plate stacked body, for example, Patent Literature 1 discloses a stacked iron core in which a plurality of divided stacked iron cores, obtained by stacking iron core pieces each having a back yoke portion and a tooth portion, are connected in an annular shape.

The divided stacked iron core of Patent Literature 1 has a groove at the tip of the tooth portion. An adhesive is injected into the groove in a state where the back yoke portion of the divided stacked iron core is pressed in the stacking direction to form a gap on the tip end side of the tooth portion. The adhesive injected in the groove soaks into the gap between the plurality of tooth portions in the divided stacked iron core.

Before the adhesive is cured, the pressure applied to the back yoke portion in the stacking direction is stopped, and the plurality of tooth portions are returned to a state without the gap. Then, when the adhesive is cured, a divided stacked iron core in which a plurality of iron core pieces are joined by the adhesive is obtained.

### Citation List

### Patent Literature

Patent Literature1: JP 2015-136228 A

### Summary of Invention

### Technical Problem

As described above, when a plurality of iron core pieces are fixed with an adhesive in a stacked state, it is easy to control the range of bonding by the adhesive if the plate stacked body is relatively large in size.

However, in the case of a small plate stacked body, it is difficult to bond the stacked plates together with an adhesive only at necessary portions. Therefore, in the case of a small plate stacked body, the adhesive may not provide sufficient bonding strength between the plates, or the adhesive may adhere to an unnecessary portion of the plate stacked body to cause functional deterioration.

On the other hand, even for a small plate stacked body, there is a demand for a configuration in which the plates made in a stacked body can be joined together with sufficient strength only at portions that need to be bonded with an adhesive.

An object of the present invention is to provide a plate stacked body enabling a plurality of plates stacked in the thickness direction to be joined together with an adhesive with sufficient joining strength without impairing the function.

### Solution to Problem

A plate stacked body according to one embodiment of the present invention includes a plurality of plates in a disk shape stacked in a thickness direction and constituting a stacked body in a columnar shape having a filled portion extending in an axial direction, and an adhesive portion in a pillar shape including an adhesive contained in the filled portion and bonding the plurality of plates together in the axial direction. A part of inner surfaces of the filled portion is configured of surfaces in the thickness direction of the plurality of plates exposed in the filled portion. The adhesive portion has an axial adhesive portion that adheres in the axial direction to the surfaces in the thickness direction of the plurality of plates exposed in the filled portion.

A stacked iron core according to one embodiment of the present invention is configured of the above-mentioned plate stacked body. Each of the plurality of plates constituting the plate stacked body is an electromagnetic steel plate.

A motor according to one embodiment of the present invention includes a stator and a rotor. At least one of the stator and the rotor has a stacked iron core in which electromagnetic steel plates are stacked in the thickness direction. The stacked iron core is configured of the above-mentioned plate stacked body.

### Advantageous Effects of Invention

According to a plate stacked body according to one embodiment of the present invention, a plurality of plates stacked in the thickness direction can be joined together with an adhesive with sufficient joining strength without impairing the function.

### Brief Description of Drawings

Fig. 1 is a diagram schematically showing a schematic configuration of a motor according to an embodiment in a cross section including a central axis.
Fig. 2 is a perspective view showing a schematic configuration of a stator core.
Fig. 3 is a plan view showing a schematic configuration of a stator core plate.
Fig. 4 is an enlarged view of a filled portion and an adhesive portion of a stator core seen from a direction orthogonal to the central axis.
Fig. 5 is an enlarged perspective view showing a filled portion of a stator core.

### Description of Embodiments

Hereinafter, an embodiment of the present invention will be described in detail with reference to the drawings. The same or corresponding parts in the drawings are denoted by the same reference numerals, and the description thereof will not be repeated. Further, the dimensions of the constituent members in each drawing do not faithfully represent the actual dimensions of the constituent members, the dimensional ratio of each constituent member, or the like.

Further, in the description of a motor 1 provided below, a direction parallel to the central axis P of a rotor 2 is referred to as an "axial direction", a direction orthogonal to the central axis P is referred to as a "radial direction", and a direction along an arc with the central axis P as the center is referred to as a "circumferential direction". However, there is no intention to limit the direction at the time of using the motor 1 by the definitions of these directions.

Further, in the following description, the expressions such as "fixed", "connected", "joined" and "attached" (hereinafter referred to as "fixed" or the like) are not limited to the case where the members are directly fixed or the like to each other. It also includes the case where it is fixed or the like via another member. That is, in the following description, the expression such as fixation includes the meaning of direct and indirect fixation or the like between members.

### (Structure of motor)

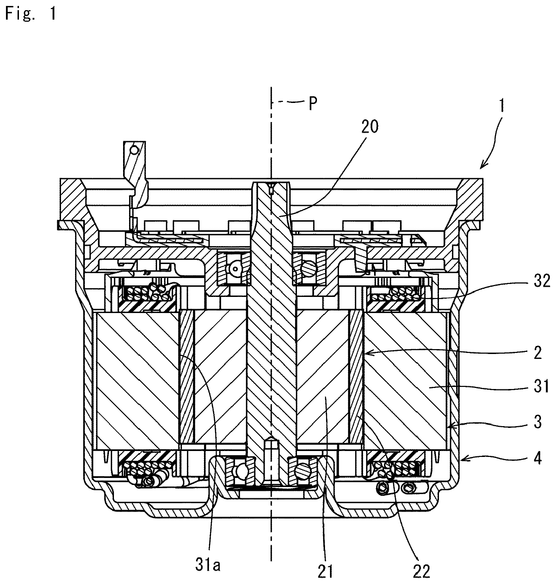

Fig. 1 shows a schematic configuration of the motor 1 according to the embodiment of the present invention. The motor 1 includes a rotor 2, a stator 3, and a housing 4. The rotor 2 rotates about the central axis P with respect to the stator 3. In the present embodiment, the motor 1 is a so-called inner rotor type motor in which the rotor 2 is rotatably positioned about the central axis P in the tubular stator 3.

The rotor 2 includes a shaft 20, a rotor core 21, and a magnet 22. The rotor 2 is located radially inside the stator 3 and is rotatable with respect to the stator 3.

In this embodiment, the rotor core 21 has a cylindrical shape extending along the central axis P. The shaft 20 extending along the central axis P is fixed to the rotor core 21 in a state of penetrating in the axial direction. As a result, the rotor core 21 rotates with the shaft 20. Further, in the present embodiment, a plurality of magnets 22 are located on the outer peripheral surface of the rotor core 21 at predetermined intervals in the circumferential direction. The magnets 22 may be located inside the rotor core 21. Further, the magnets 22 may be a ring magnet connected in the circumferential direction.

The stator 3 is housed in the housing 4. In this embodiment, the stator 3 has a tubular shape. The rotor 2 is positioned radially inside the stator 3. That is, the stator 3 is positioned so as to face the rotor 2 in the radial direction. The rotor 2 is positioned radially inside the stator 3 so as to be rotatable about the central axis P.

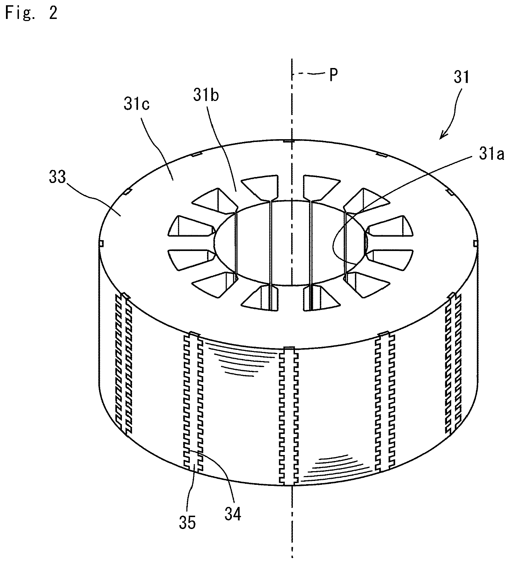

The stator 3 includes a stator core 31 and a stator coil 32. Fig. 2 is a perspective view showing a schematic configuration of the stator core 31.

As shown in Fig. 2, in the present embodiment, the stator core 31 has a cylindrical shape extending in the axial direction. That is, the stator core 31 has a circular through hole 31a, a plurality of stator core teeth 31b, and an annular back yoke 31c. The rotor core 21 and the magnets 22 of the rotor 2 are positioned in the through hole 31a.

The plurality of stator core teeth 31b extend radially inward from the inner peripheral side of the back yoke 31c. The inner peripheral ends of the plurality of stator core teeth 31b form the peripheral edge of the through hole 31a. A stator coil 32 is wound around the plurality of stator core teeth 31b.

The stator core 31 has a plurality of groove-shaped filled portions 34 extending in the axial direction and a plurality of adhesive portions 35 extending in the filled portion 34 in the axial direction, on the outer peripheral side of the back yoke 31c. The plurality of filled portions 34 are located on the outer peripheral side of the back yoke 31c at equal intervals in the circumferential direction. Therefore, the plurality of adhesive portions 35 are also located on the outer peripheral side of the back yoke 31c at equal intervals in the circumferential direction. The plurality of adhesive portions 35 join a plurality of stator core plates 33, described later, in the axial direction.

The detailed configurations of the filled portion 34 and the adhesive portion 35 will be described later.

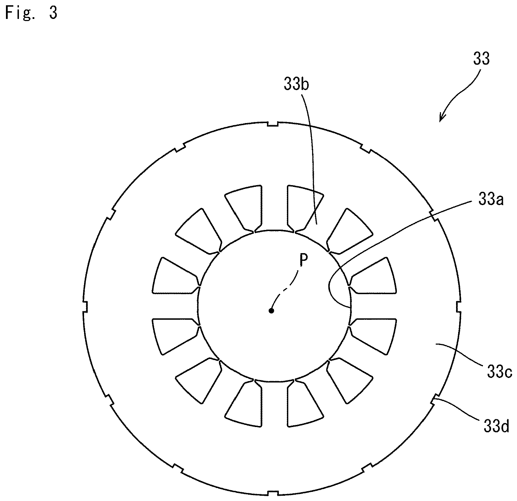

The stator core 31 has a plurality of stator core plates 33 formed in a predetermined shape and stacked in the thickness direction. Fig. 3 is a plan view showing an example of the stator core plate 33. The stator core plate 33 is a disk-shaped electromagnetic steel plate. The stator core plate 33 corresponds to a disk-shaped plate of the present invention.

The stator core plate 33 has a circular hole portion 33a, a plurality of tooth portions 33b, and an annular yoke portion 33c. Each of the plurality of tooth portions 33b projects radially inward from the inner peripheral side of the yoke portion 33c.

A plurality of stator core plates 33 are stacked in the thickness direction to form the stator core 31. Therefore, the hole portion 33a of the stator core plate 33 constitutes a part of the through hole 31a of the stator core 31. Similarly, the tooth portion 33b of the stator core plate 33 constitutes a part of the stator core tooth 31b of the stator core 31. Further, the yoke portion 33c of the stator core plate 33 constitutes a part of the back yoke 31c of the stator core 31.

The yoke portion 33c has a plurality of notches 33d on the outer peripheral side. The plurality of notches 33d have a rectangular shape when viewed in the axial direction. The plurality of notches 33d form a part of the filled portion 34 of the stator core 31. The plurality of notches 33d may have another shape such as a circular shape or a triangular shape when viewed in the axial direction.

The stator core plate 33 is obtained by punching a strip-shaped electromagnetic steel plate into a disk shape with a die. In the present embodiment, in the stator core 31, a state in which a plurality of stator core plates 33 are not joined by the adhesive portion 35 is referred to as a stacked body.

### (Filled portion and adhesive portion)

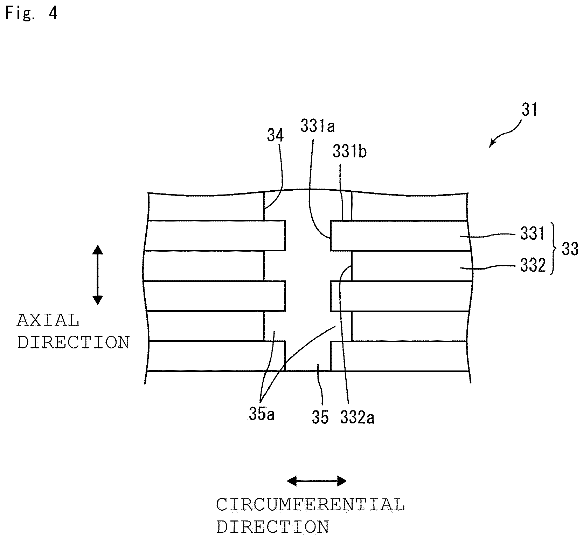

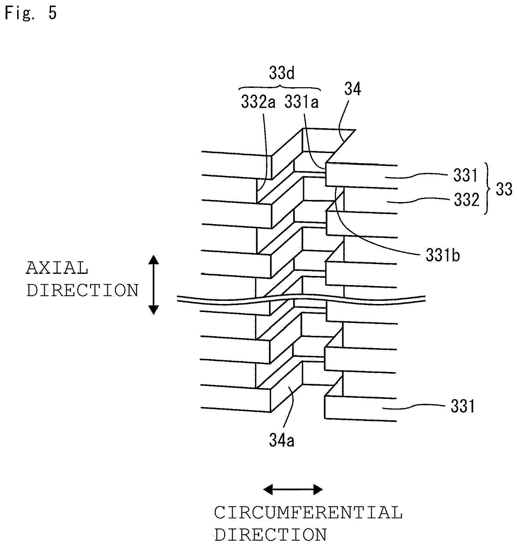

Next, the detailed configurations of the filled portion 34 and the adhesive portion 35 of the stator core 31 will be described. Fig. 4 is an enlarged view of the filled portion 34 and the adhesive portion 35 of the stator core 31 as viewed from the direction orthogonal to the central axis P. Fig. 5 is an enlarged perspective view of the filled portion 34 of the stator core 31.

As shown in Figs. 2 and 5, the filled portion 34 of the stator core 31 is a groove extending in the axial direction on the outer peripheral side of the back yoke 31c of the stator core 31. The filled portion 34 is configured of the notches 33d located on the outer peripheral side of the yoke portions 33c of the plurality of stator core plates 33 stacked in the thickness direction.

The filled portion 34 has a plurality of inner surfaces 34a extending in the axial direction. In the present embodiment, the filled portion 34 has three inner surfaces 34a configured of three end faces constituting each of the notches 33d in the plurality of stator core plates 33.

The width of the filled portion 34 in the circumferential direction differs between the adjacent stator core plates 33 in the axial direction of the stator core 31. That is, in the plurality of stator core plates 33 constituting the stator core 31, the lengths of the plurality of notches 33d in the circumferential direction are different in the stator core plates 33 adjacent to each other in the thickness direction.

Specifically, the plurality of stator core plates 33 constituting the stator core 31 include a first stator core plate 331 having a notch in which the length in the circumferential direction is short and a second stator core plate 332 having a notch in which the length in the circumferential direction is long. The first stator core plate 331 and the second stator core plate 332 are alternately stacked in the thickness direction. As a result, the width of the filled portion 34 differs between the adjacent stator core plates 33.

In the following, the notch of the first stator core plate 331 is denoted by a reference numeral 331a, and the notch of the second stator core plate 332 is denoted by a reference numeral 332a. That is, the notches 33d of the stator core plates 33 include the notch 331a of the first stator core plate 331 and the notch 332a of the second stator core plate 332. The circumferential length of the notch 332a of the second stator core plate 332 is longer than the circumferential length of the notch 331a of the first stator core plate 331.

With the above configuration, a surface 331b of the peripheral portion of the notch 331a in the first stator core plate 331 is exposed in the filled portion 34. That is, a part of the surface 331b in the thickness direction of the first stator core plate 331 is exposed in the filled portion 34 and constitutes a part of the inner surface 34a of the filled portion 34. In the filled portion 34, the surfaces 331b in the thickness direction of the plurality of first stator core plates 331 are exposed.

In the present embodiment, in the plurality of stator core plates 33 constituting the stator core 31, the first stator core plates 331 are located at both ends in the axial direction. As will be described later, from the viewpoint of the strength of the stator core 31, it is preferable that the first stator core plates 331 are located at both ends in the axial direction of the stator core 31, but the second stator core plates 332 may be located at both ends in the axial direction of the stator core 31.

The adhesive portion 35 is obtained by curing the adhesive contained in the filled portion 34 having the above-described configuration. That is, the adhesive portion 35 is composed of an adhesive.

As the adhesive, for example, an adhesive having a viscosity that does not flow out from the filled portion 34 when contained in the filled portion 34 is preferable. Further, the adhesive is preferably a thermoplastic adhesive. As described above, by using a thermoplastic adhesive, it is possible to suppress deformation of the stator core plate 33 and the like because heating is not required when the adhesive is cured.

When the motor 1 is a large motor, a thermosetting adhesive may be used as the adhesive because the influence of heat on the stator core plate is small.

With the above configuration, as shown in Fig. 4, the adhesive portion 35 in a pillar shape for bonding the plurality of stator core plates 33 in the axial direction is formed in the filled portion 34. A part of the inner surface of the filled portion 34 is configured of the surface 331b in the thickness direction constituting the peripheral portion of the notch 33d in the first stator core plate 331. Therefore, the adhesive portion 35 bonds and fixes the surfaces 331b in the thickness direction of the first stator core plates 331, which constitute a part of the inner surface of the filled portion 34.

As a result, the surfaces 331b in the thickness direction of the plurality of first stator core plates 331 located at predetermined intervals in the filled portion 34 of the stator core 31 can be bonded and fixed in the axial direction by the adhesive portion 35.

That is, the adhesive portion 35 has an axial adhesive portion 35a that bonds the surfaces 331b in the thickness direction of the first stator core plates 331 exposed in the filled portion 34, in the axial direction of the stator core 31. The axial adhesive portion 35a is located between the surfaces 331b in the thickness direction of the first stator core plates 331 adjacent to each other in the stacking direction, in the filled portion 34. By the axial adhesive portion 35a, a joining force in the axial direction is generated in the plurality of stator core plates 33 stacked in the thickness direction.

Moreover, in the present embodiment, as described above, the first stator core plates 331 are located at both ends of the stator core 31 in the axial direction. Therefore, as described above, by bonding the surfaces 331b in the thickness direction of the first stator core plates 331 in the axial direction by the axial adhesive portion 35a, it is possible to join the plurality of stator core plates 33 constituting the stator core 31 more firmly in the axial direction.

Moreover, as described above, since the adhesive portion 35 is formed by filling the filled portion 34 with an adhesive and curing the adhesive, in the shape of the adhesive portion 35, the circumferential dimensions are different between the adjacent stator core plates 33 when viewed in the direction orthogonal to the central axis P of the stator core 31.

As a result, the plurality of stator core plates 33 can be more firmly joined in the axial direction by the adhesive portion 35.

The stator core 31 of the present embodiment is a plate stacked body formed by stacking a plurality of stator core plates 33 in the thickness direction. The stator core 31 includes a plurality of disk-shaped stator core plates 33 that are stacked in the thickness direction and constitute a columnar stacked body having the filled portion 34 extending in the axial direction, and the adhesive portion 35 in a pillar shape configured of an adhesive contained in the filled portion 34 and bonds the plurality of stator core plates 33 in the axial direction. A part of the inner surface of the filled portion 34 is configured of the surface 331b in the thickness direction of the first stator core plate 331 exposed in the filled portion 34. The adhesive portion 35 has the axial adhesive portion 35a that adheres in the axial direction to the surface 331b in the thickness direction of the first stator core plate 331 exposed in the filled portion 34.

In the case where the radial size of the columnar stacked body configured of the plurality of stator core plates 33 stacked in the thickness direction is small, when the surfaces of the plurality of stator core plates 33 in the thickness direction are bonded to each other with an adhesive, it is difficult to control the adhesive applying position. Even in that case, since the adhesive portion 35 in the pillar shape extending in the axial direction has the axial adhesive portion 35a as described above, the plurality of stator core plates 33 can be firmly joined in the axial direction. That is, since a part of the inner surface of the filled portion 34 is configured of the surfaces 331b in the thickness direction of the first stator core plates 331 exposed in the filled portion 34, and an adhesive is applied to the surfaces 331b to obtain the axial adhesive portion 35a, the axial joining force with respect to the plurality of stator core plates 33 can be generated in the adhesive portion 35.

Therefore, the plurality of stator core plates 33 stacked in the thickness direction can be firmly joined in the axial direction by using an adhesive.

Among the plurality of stator core plates 33 constituting the stator core 31, the surfaces 331b in the thickness direction of at least two first stator core plates 331 located apart from each other in the axial direction is exposed in the filled portion 34. The axial adhesive portion 35a is configured of the adhesive applied to the surfaces 331b in the thickness direction of the at least two first stator core plates 331.

Since the axial adhesive portion 35a is configured of the adhesive applied to the surfaces 331b in the thickness direction exposed in the filled portion 34 in at least two first stator core plates 331 located apart from each other in the axial direction, a plurality of stator core plates 33 stacked in the thickness direction can be more firmly joined in the axial direction.

The first stator core plates 331 in which the surfaces 331b in the thickness direction are exposed in the filled portion 34 are located at both ends in the axial direction of the stator core 31. The axial adhesive portion 35a adheres to the surfaces 331b in the thickness direction of the first stator core plates 331 located at both ends in the axial direction of the stator core 31.

As a result, the plurality of stator core plates 33 stacked in the thickness direction can be joined more firmly in the axial direction.

The inner surface of the filled portion 34 includes a plurality of inner surfaces 34a extending in the axial direction. A part of the plurality of inner surfaces 34a is configured of the surface 331b in the thickness direction of the first stator core plate 33 exposed in the filled portion 34. The axial adhesive portion 35a is composed of an adhesive applied to the surfaces 331b in the thickness direction of the first stator core plates 331 exposed in the filled portion 34 on the plurality of inner surfaces 34a.

As a result, the plurality of stator core plates 33 stacked in the thickness direction can be joined more firmly in the axial direction by the axial adhesive portion 35a adhering to the surfaces 331b in the thickness direction of the first stator core plates 331 exposed in the filled portion 34 on the plurality of inner surfaces 34a of the filled portion 34.

The filled portion 34 is a groove located on the outer peripheral surface of the stator core 31 and extending in the axial direction.

As a result, the plurality of stator core plates 33 stacked in the thickness direction can be joined in the axial direction by the adhesive portion 35 composed of the adhesive contained in the filled portion 34 located on the outer peripheral surface.

The stator core plate 33 constituting the stator core 31 is an electromagnetic steel plate.

As a result, the stator core 31 in which the electromagnetic steel plates are stacked in the thickness direction is obtained. Even in the case of the small stator core 31, the stator core plates 33 can be firmly joined in the axial direction by the adhesive.

The motor 1 of the present embodiment includes the stator 3 and the rotor 2. At least one of the stator 3 and the rotor 2 has a stacked iron core in which electromagnetic steel plates are stacked in the thickness direction. The stacked iron core is configured of a plate stacked body having the same configuration as that of the stator core 31 of the present embodiment.

The configuration of the present embodiment can be applied to the stacked iron core of at least one of the stator 3 and the rotor 2 of the motor 1. Therefore, the stacked iron core of a small motor can be firmly joined in the axial direction with an adhesive.

### (Other embodiments)

Although the embodiment of the present invention has been described above, the above-described embodiment is merely an example for carrying out the present invention. Therefore, the present embodiment is not limited to the above-described embodiment, and the above-described embodiment can be appropriately modified and implemented within a range that does not deviate from the gist thereof.

In the above embodiment, the configuration of the stator core 31 has been described. However, the stacked structure as described in the above embodiment may be applied to a configuration other than a stator core as long as it is a plate stacked body in which plates are stacked in the thickness direction. For example, the stacked structure as described in the above embodiment may be applied to a rotor core. Even in the case of applying the stacked structure of the above embodiment to a plate stacked body other than a stator core in this way, the plate stacked body includes a groove-shaped filled portion located on the outer peripheral surface and extending in the axial direction, and an adhesive portion configured of an adhesive in the filled portion, as in the embodiment.

In the above embodiment, in the stator core 31, the first stator core plate 331 with the notch 331a and the second stator core plate 332 with the notch 332a having a circumferential length that is longer than that of the notch 331a are alternately located in the thickness direction. However, the first stator core plate and the second stator core plate may be arranged in the thickness direction in any way as long as a plurality of stator core plates constituting the stator core include a plurality of first stator core plates.

From the viewpoint of joint strength in the axial direction of the stator core 31, it is preferable that the first stator core plates are located at both ends of the stator core 31 in the axial direction as in the above embodiment.

In the above embodiment, the plurality of stator core plates 33 include the first stator core plate 331 with the notch 331a, and the second stator core plate 332 with the notch 332a having a circumferential length that is longer than that of the notch 331a. However, for a plurality of stator core plates, if surfaces in the thickness direction of some of the stator core plates are exposed in the filled portion, it is not necessary to include two types of stator core plates with notches having different circumferential lengths. That is, the plurality of stator core plates may include a plurality of types of stator core plates having different notch shapes and having surfaces in the thickness direction of some of the stator core plates exposed in the filled portion.

In the above embodiment, the stator core plate 33 is an electromagnetic steel plate. However, the stator core plate may be a plate member other than an electromagnetic steel plate.

In the above embodiment, as an example of the stator core plate 33, the examples shown in Figs. 2 and 3 are given. However, the structure of the stator core plate may be other than those shown in Figs. 2 and 3.

In the above embodiment, as examples of the filled portion 34 and the adhesive portion 35 included in the stator core 31, the examples shown in Figs. 2 and 4 are given. However, the structures of the filled portion and the adhesive portion may be other than those shown in Figs. 2 and 4.

In the above embodiment, the motor is a so-called permanent magnet motor. In a permanent magnet motor, the rotor has a magnet. However, the motor 1 may be a motor without a magnet, such as an induction machine, a reluctance motor, a switched reluctance motor, or a winding field type motor.

### Industrial Applicability

The present invention is applicable to a plate stacked body in which a plurality of disk-shaped plates stacked in the thickness direction are joined with an adhesive.

### Reference Signs List

- 1: motor
- 2: rotor
- 3: stator
- 4: housing
- 20: shaft
- 21: rotor core
- 22: magnet
- 31: stator core (plate stacked body, stacked iron core)
- 31a: through hole
- 31b: stator core tooth
- 31c: back yoke
- 32: stator coil
- 33: stator core plate (plate)
- 33a: hole portion
- 33b: tooth portion
- 33c: yoke portion
- 33d: notch
- 34: filled portion
- 34a: inner surface
- 35: adhesive portion
- 35a: axial adhesive portion
- 331: first stator core plate
- 331a: notch
- 331b: surface in thickness direction
- 332: second stator core plate
- 332a: notch
- P: central axis

## Claims

1. A plate stacked body comprising:
a plurality of plates (33) in a disk shape, the plurality of plates (33) being stacked in a thickness direction and constituting a stacked body in a columnar shape having a filled portion (34) extending in an axial direction; and
an adhesive portion (35) in a pillar shape, the adhesive portion (35) including an adhesive contained in the filled portion (34) and bonding the plurality of plates (33) together in the axial direction, **characterized in that**
a part of inner surfaces of the filled portion (34) includes a surface in the thickness direction of the plurality of plates (33) exposed in the filled portion (34), and
the adhesive portion (35) includes an axial adhesive portion (35a) that adheres in the axial direction to the surface in the thickness direction of the plurality of plates (33) exposed in the filled portion.

2. The plate stacked body according to claim 1, **characterized in that**
among the plurality of plates (33) constituting the stacked body, surfaces in the thickness direction of at least two of the plurality of plates (33) located apart from each other in the axial direction are exposed in the filled portion (34), and
the axial adhesive portion (35a) includes the adhesive applied to the surfaces in the thickness direction of the at least two plates (33).

3. The plate stacked body according to claim 2, **characterized in that**
the at least two plates (33) in which the surfaces in the thickness direction are exposed in the filled portion (34) are located at both ends of the stacked body in the axial direction, and
the axial adhesive portion (35a) bonds the surfaces in the thickness direction of the at least two plates (33) located at both ends in the axial direction of the stacked body.

4. The plate stacked body according to any one of claims 1 to 3, **characterized in that**
inner surfaces of the filled portion (34) include a plurality of inner surfaces extending in the axial direction,
a part of the plurality of surfaces includes the surface in the thickness direction of the plurality of plates (33) exposed in the filled portion (34), and
the axial adhesive portion (35a) includes the adhesive applied to the surface in the thickness direction of the plurality of plates (33) exposed in the filled portion (34) on the plurality of surfaces.

5. The plate stacked body according to any one of claims 1 to 4, **characterized in that**
the filled portion (34) is a groove located on an outer peripheral surface of the stacked body and extending in the axial direction.

6. A stacked iron core comprising the plate stacked body according to any one of claims 1 to 5, **characterized in that**
each of the plurality of plates (33) constituting the plate stacked body is an electromagnetic steel plate.

7. A motor (1) comprising:
a stator (3); and
a rotor (2), **characterized in that**
at least one of the stator (3) and the rotor (2) includes a stacked iron core in which electromagnetic steel plates are stacked in a thickness direction, and
the stacked iron core includes the plate stacked body according to any one of claims 1 to 5.
